# EUROPEAN PATENT APPLICATION

(11) **EP 1 398 257 A2**
(43) Date of publication of application: **17.03.2004**
(21) Application number: 03425566.1
(22) Date of filing: 01.09.2003
(51) Int. Cl.: B62K 3/00, B62M 1/02

(54) **Cantilevered pedal propulsioned bicycle**

(30) Priority: 12.09.2002 IT VE20020029
(71) Applicant: INNTEK, Srl., 30027 San Donà di Piave (Venezia) (IT)
(72) Inventor: Urban, Ivano, 30017 Jesolo Lido (IT)

(57) **Abstract**

This invention concerns a bicycle to which substantial modifications concerning ergotechnic positioning have been introduced in order to obtain a man/machine combination with a velocity performance higher than that of conventional racing bicycles. The substantial modifications have been introduced to the frame, to the motion transmission system, to the handlebar assembly and to the saddle assembly. The frame has triangular geometry where in the front vertex there is the handlebar assembly, in the rear vertex the propulsion assembly, and in the intermediate vertex, that is placed upwards, the saddle assembly. Between the intermediate vertex and the rear vertex of the frame, the appendices that form the rear wheel fork are located, the same wheel is locked rotationally in an intermediate position to the appendices included between the initial part and the end of said appendices. The propulsion assembly is comprised of two separate assemblies, rotationally attached to the ends of the appendices that form the rear fork. The motion transmission and the contraposition of the pedals are guaranteed by the connection between the rear chain wheel sprocket, found in the pedal propulsion assembly, and the chainrings, found at the end of the shaft, by means of two lateral chains. The assemblies that form the pedal propulsion assembly are cantilevered with respect to the rear wheel hub. The length of the end of the appendices, forming the rear wheel fork, does not exceed the circumference of the rear wheel.

## Description

### Technical field

This invention relates to a bicycle devised for obtaining high velocity performance from the man/machine combination. The main objective of this bicycle is to provide the cyclist, through an innovative ergotechnic position, with a new posture, from which it is possible to obtain multiple advantages, namely: to improve the aerodynamic coefficient of the man/machine combination, to improve the cyclist's pulmonary ventilation and to improve the transfer of muscle energy. The new technologies applied to this new human powered mode of transportation, principally concern the frame geometry, the positioning of the pedal assembly, the transmission system, the handlebar assembly, and the saddle assembly, described below in detail. The prototype has already been constructed, using the technology that is the object of the present invention, and from tests carried out it was possible to apply certain improvements to the saddle assembly (Italian patent application VE2003A000001), as well as a new type of transmission (Italian patent application VE2003A000009), that allows the adaptation of the speed variators, already existing on the market.

### Existing Technique

From previous research, carried out personally, it emerged that many inventors have studied new technologies to contribute to bicycle design, with the objective of supplying instruments and machines with ever higher efficiency coefficients, such as the American Kidney who in the 1907, patent. N° US 846033, invented the first predisposed prone position bicycle, always maintaining the pedal assembly between the front and rear wheel, the German Drewitz in 1925, patent. DE 441733, invented the first bicycle with the pedal propulsion assembly placed on the exterior of the rear wheel, after this followed many other bicycle inventions with pedal propulsion assemblies placed in the same way, namely described in the following patents: FR 769547, CH 236146, GB 1300566, US 4411443, SU 1698123, FR 2556686, US 4647060, EP 0154118, DE 8614882, ES 2070684, DE 4124292, NL 9300008, DE 4407359, GB 2311262. In spite of the exact ergonomic concepts, on which the inventors and their inventions are based, said inventions have not been applied to a serious industrial or sporting application. From what I have discovered, no analogy to the present invention has been verified with reference to the priority document.

### Exposition of the invention

The bicycle that is the object of the invention consists of two wheels, front/rear inserted in a context made up of:
a frame built from materials suitable for the estimated force, whose vertices mirror
a triangular geometry wherein, the handlebar assembly and rear wheel fork are placed in the front vertex, the pedal propulsion assembly is placed in the rear vertex, the saddle assembly is placed upwards in the intermediate vertex, between the vertex that accommodates the saddle assembly and the vertex that accommodates the pedal propulsion assembly the appendices for accommodating the rear wheel are found, their axis being attached rotationally between the pedal propulsion assembly and the saddle assembly.

The saddle assembly comprising, a seat binder for attaching said assembly to the frame, on which the shaft with clamp and relative bolt is attached, the seat binder with clamp is attached to the peripheral side of the frame that starts from the upward placed vertex and the rear vertex; the seat post is circular and hollow; the connecting joint with the saddle is equipped for housing two twisting spring hooks that rest on a special bolt that also serves the function of attaching the supported seat; the saddle has a special anatomical shape arranged in the following way, the rear part is flat with sufficient width for the support of the pubic bone, the central part has symmetric semicircular lateral indentations, the rear part is semicircular with an upward facing end, with a width intermediate to the front part and the central part; in the underside of the seat frame a metal guide is attached with a "T" cross section with predisposed holes in the vertical part, for attaching the connecting joint to the saddle as well as for locking the forward/backward positions, and in the horizontal part for the coupling of the appendixes relative to the twisting springs; the saddle includes filling with soft foam-like material covered with suitable or similar fabric.

The handlebar assembly comprises, a central stem made up of a tubular hollow metal profile, having a clamp with a cylindrical bolt arranged in a horizontal direction into the upper part, in which a cylindrical hollow W shaped metal profile is centrally housed, with rounded corners and downward facing ends; in the aforementioned lateral end two special inverted "T" shaped cylindrical joints are applied, there are also two telescopic appendixes that are made up of a hollow tubular "L" shaped metal profile with the predisposition for levers and handlebar grips; in the special joints the anatomical clamps are predisposed to allow the support of the elbow or the forearm; these special inverted "T" joints are arranged to accommodate, both on the lateral part and on the front, conical constriction clamps, suitable for allowing the locking of said clamps in the desired position.

The pedal assembly and transmission system are made up of the rear wheel hub and two separate assemblies that form the pedal propulsion assembly; the rear wheel hub is attached to the appendices that form the rear fork, in the front direction with respect to the assemblies that form the pedal propulsion assembly; the rear wheel hub is composed of two washers with spokes or tensors, in which a shaft is housed that is made up of different mechanical elements joined together by means of appendices and/or threaded holes in the individual pieces, in the present compound shaft, the radial ball bearings and the free wheel device are coupled, the compound shaft is attached rotationally to the appendices of the frame with the aid of circular washers perforated circumferentially and in turn fixed by screws to the appendices; at the ends of the compound shaft the chainrings, connected by means of chains, are attached to the rear chain wheel sprockets; at the two ends of the appendices that form the back fork, cantilevered in respect to the rear wheel hub, the assemblies that form the pedal propulsion assembly are rotationally attached and perfectly opposed.

The distance between the rotation axes of the chainrings is determined by the sum of the resultant spokes and the space interposed between them. The static 180° contraposition of the pedals, is guaranteed in both rotation directions, by the connection of the chainrings, by two chains, and from the joint teeth arrangement, of said chainrings. The advantages achieved through human propulsion transport means, just described, derive mainly from the position imposed on the cyclist, by the new ergotechnic position from which the following advantages are derived:
the man/machine combination discloses the advancement towards a smaller surface, thus improving aerodynamic performance.
the position of the pedal propulsion assembly and of the saddle, imposes on the cyclist in the pedalling action, an inclination of the lower limbs that varies from 90° to 135° approximately, in that way, the pelvis of said cyclist assumes a natural position, improving pulmonary ventilation and consequent blood oxygenation.

The posture imposed on the cyclist by the new ergotechnic position, gives the cyclist a support point that is essential for being able to exert energy on the pedal propulsion assembly that is higher than the corporeal weight itself without dispelling energy.

The compact transmission system reduces remarkably the dissipation of energy due to the various torsions, facilitating the transformation of work into kinetic energy

Follows the nomenclature of the included figures:
**Fig. 1**
   Axonometric projection of the bicycle object of the invention, 1 pedal traction assembly, 2 frame, 3 seat assembly, 4 handlebar assembly.
**Fig. 2**
   Representation of the posture position assumed by athlete on the bicycle object of the invention, 1 seat, pelvic support point (pubis/perineum), 2 handlebar, elbow/forearm support point, 3 handlebar appendices, handlebar grips, 4 pedal traction assembly, point where the lower limbs exert the force.
**Fig. 3**
   Representation of a complete cycle completed by the lower left limb, A/B counterclockwise rotation phase in which the lower left limb transmits a force on the left pedal, right limb at rest, C start phase rest for the left limb and for the right limb start force transmission phase on the right pedal, in this phase the maximum desired extension for the left limb and the maximum contraction for the right limb is achieved, D terminal rest phase for the left limb and next transmission force start on the right pedal for the right limb.
**Fig. 4**
   Axonometric projection of the pedal propulsion assembly and components of said assembly, 1 left pedal assembly, 2 right pedal assembly, 3 left transmission chain, 4 right transmission chain, 5 left driving pinion, 6 right driving pinion, 7 rear wheel hub with attached compound shaft combination.
**Fig. 5**
   Exploded rear wheel hub, 1 hexagonal headed screw with metric thread, 2 elastic 5 washer, 3 chainring (driven) with rectangular hole, 4 circular screw joint provided with side milling with threaded blind hole and end with smaller diameter threaded externally, 5 thrust key for the axial locking of the blind hole bearing and end with smaller diameter externally threaded, 6 radial bearing, 7 flat- headed screws with metric thread, 8 flange circumferentially holed for attaching to the frame, 9 radial bearing, 10 free wheel device, 11 circular screw joint with threaded blind holes predisposed for keying the radial bearings, 12 rear wheel tensor support flange, 13 radial bearing, 14 hub, 15 radial bearing, 16 rear wheel tensors support flange, 17 circular screw joint provided with milling and threaded side holes predisposed for keying the bearing, 18 thrust key for the axial locking of the radial bearing with 5 blind threaded hole and end with smaller diameter externally threaded, 19 circumferentially holed flange for supporting the frame, 20 flat headed screws with metric thread, 21 radial bearing, 22 circular screw joint provided with side milling with threaded blind hole and end with smaller diameter externally threaded, 23 chainring (driven) with rectangular hole, 24 elastic washer, 25 hexagonally headed screw with metric thread.
**Fig. 6**
   Exploded pedal propulsion assembly, left assembly: 1 flat headed screw with metric thread, 2 crank arm with circular end with grooved hole, 3 elastic washer, 4 rear chain wheel sprocket, 5 rigid joint with threaded appendix, 6 flat headed screws with metric thread, 7 circumferentially holed flange for attachment to the frame, 8 radial bearing, 9 key with shoulder and threaded blind hole for the axial locking of the radial bearing. Right assembly: 10 flat headed screw with metric thread, 11 crank arm with circular end with grooved hole, 12 elastic washer, 13 rear chain wheel sprocket, 14 rigid joint with threaded appendix, 15 flat headed screws with metric threading, 16 circumferentially holed flange for attachment to the frame, 17 radial bearing, 18 key with readjuster and threaded blind hole for the axial locking of the radial bearing.
**Fig. 7**
   Cut-out view of the complete rear wheel hub, the arrows indicate the advance rotation direction therefore it should be pointed out that the threading making up the left sector of the compound shaft has a leftward turning direction and the threading of the right sector has a rightward turning direction.
**Fig. 8**
   Cut-out view of the pedal propulsion assembly, it should be noted that the screw threads in the rigid joint of the left assembly have a rightward turning direction, and the corresponding threads present in the rigid joint of the right assembly have a rightward turning direction.
**Fig. 9**
   Axonometric projection of the frame, with a geometric triangular shape, 4 front vertex, 6 rear vertex, 5 intermediate vertex placed upwards, where between the intermediate vertex placed upwards (5) and the rear vertex (6) the fork for accommodating the rear wheel motor hub is located, 2 point where the left assembly is attached, 3 point where the right assembly is attached, the said assemblies form the pedal propulsion assembly.
**Fig. 10**
   Axonometric projection of the seat assembly, highlighting the seat comprising, 1 first section, 2 section (central part), 3 third section, 4 forward/backward adjustment, 5 movement angle in vibration absorption, 6 up/down adjustment with an inclination of approximately 45°.
**Fig. 11**
   Exploded saddle assembly, 1 anatomically shaped seat, 2 metallic "T" cross section guide with predisposed holes, in a horizontal direction, for the upper appendices of the two torsion springs, and on the vertical part for forward/backward adjustment, 3 right torsion spring, 4 and 5 bolts for locking the seat to the joint predisposed for supporting the torsion springs, 6 left torsion spring, 7 connecting joint between the saddle and the seat post, 8 and 9 hexagonally headed threaded screws, 10 seatpost, 11 circular clamp, 12 and 13 clamp locking bolt, 14 shaft, 15 seat binder.
**Fig. 12**
   Exploded handlebar assembly, 1 and 2 handgrips, 3 and 4 self-propelled appendices, 5 and 7 joints for adjustments with conical constriction ring nut for locking, 6 cylindrical clamp with bolts, 8 bar bent to "omega" with rounded corners and downward facing vertices, 9 support stem.
**Fig. 13**
   Axonometric projection of the handlebar assembly, 10 highlights in particular the tubular omega profile of the conjunction joint with the vertices placed downward and the handgrip appendices. Representation of the possibilities of adjusting the entire handlebar assembly, 1 and 2 adjusting the inclination of the handgrips, 3 and 4 forward/backward appendix adjustment, 5 appendix inclination adjustment, 7 and 9 width adjustment of the appendices and of the elbow/forearm support, 6 forward/backward adjustment rotating on the "omega" profile cylindrical clamp axis, 8 up/down adjustment of the entire handlebar assembly by means of the stem/shaft.
**Fig. 14**
   Axonometric projection of the inverted "T" joint on the handlebar assembly, 1 right handlebar appendix, 2 front conic constriction ring nut, 3 front deflection blades, 4 hollow circular joint, 5 side deflection blades, 6 right end of the "omega" handlebar profile, 7 conical constriction ring nut.

### Brief description of drawings

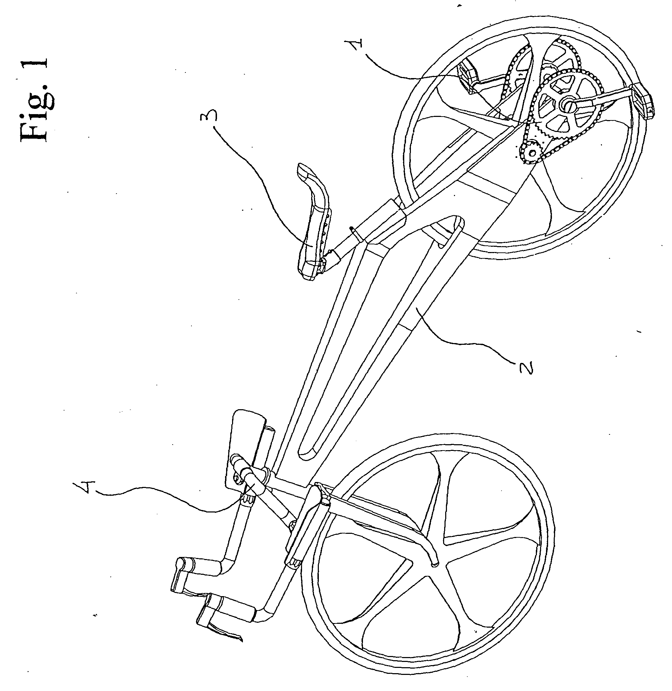

**Fig. 1 -** Three-dimensional view of the bicycle that is the object of the invention.

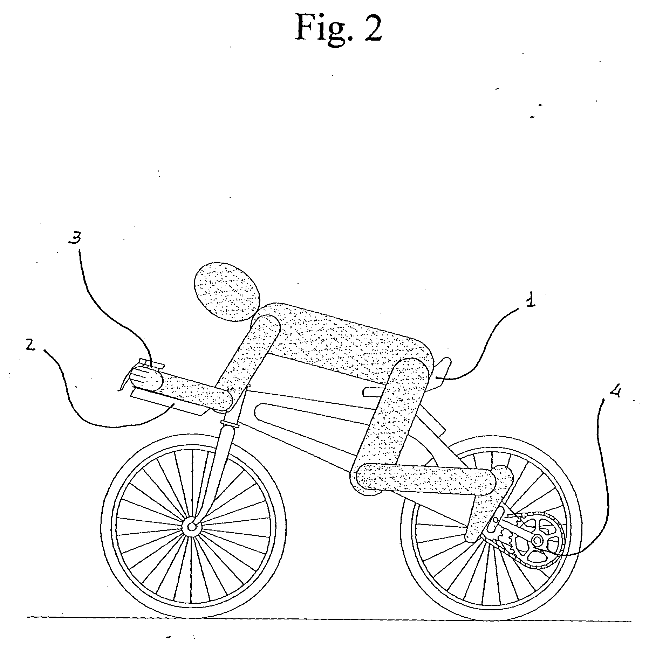

**Fig. 2 -** Two-dimensional view of the new ergonomic position.

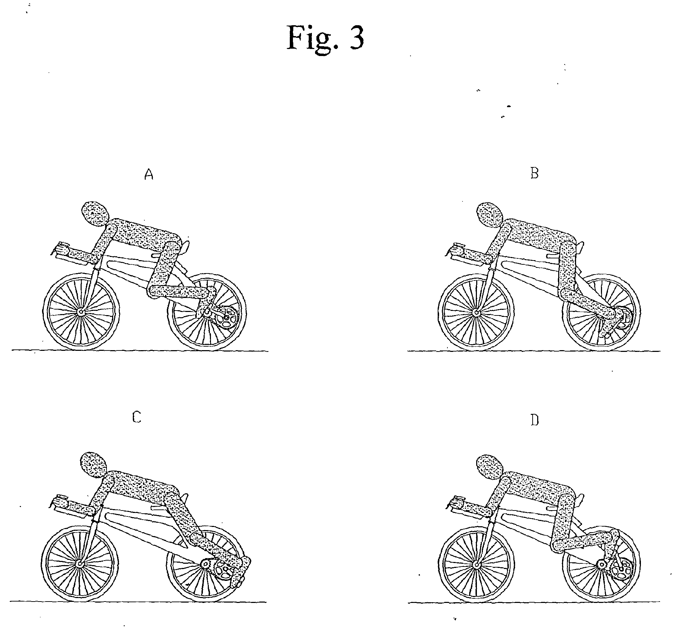

**Fig. 3 -** Two-dimensional view of the propulsion stages.

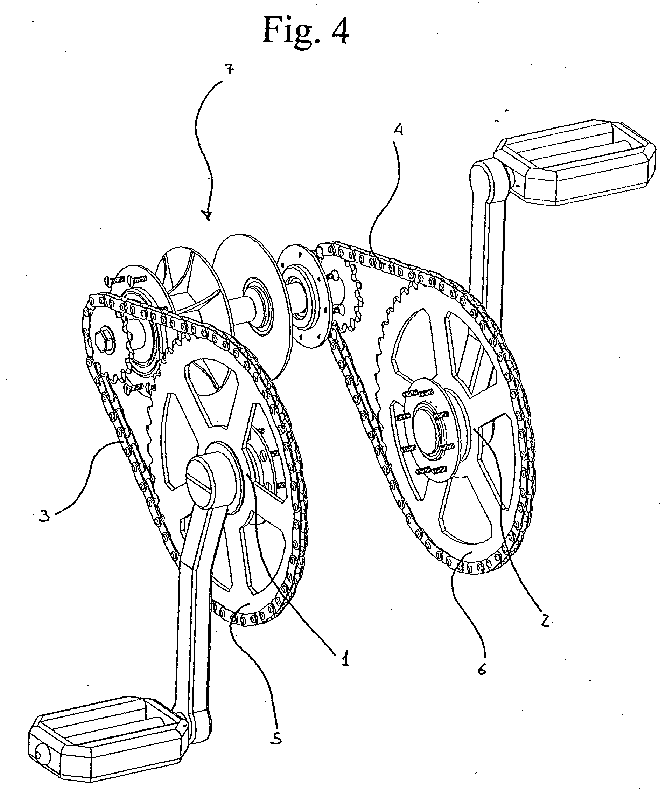

**Fig. 4 -** Three-dimensional view of the transmission system and of the two assemblies that form the pedal propulsion assembly.

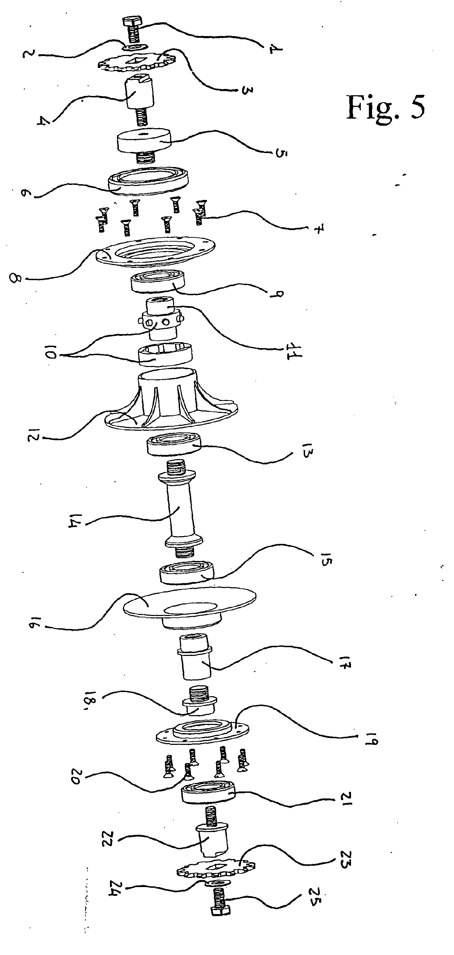

**Fig. 5 -** Exploded rear wheel hub.

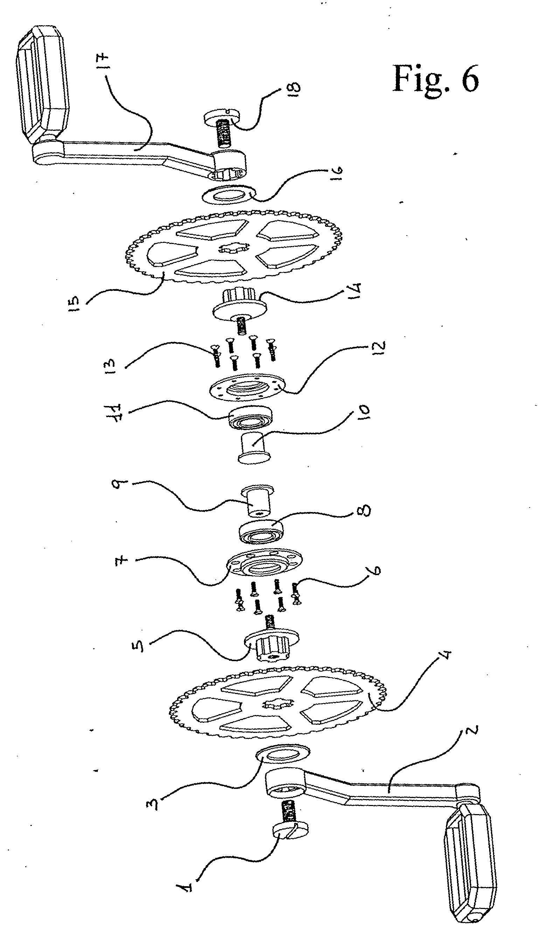

**Fig. 6 -** Exploded assemblies that form pedal propulsion assembly.

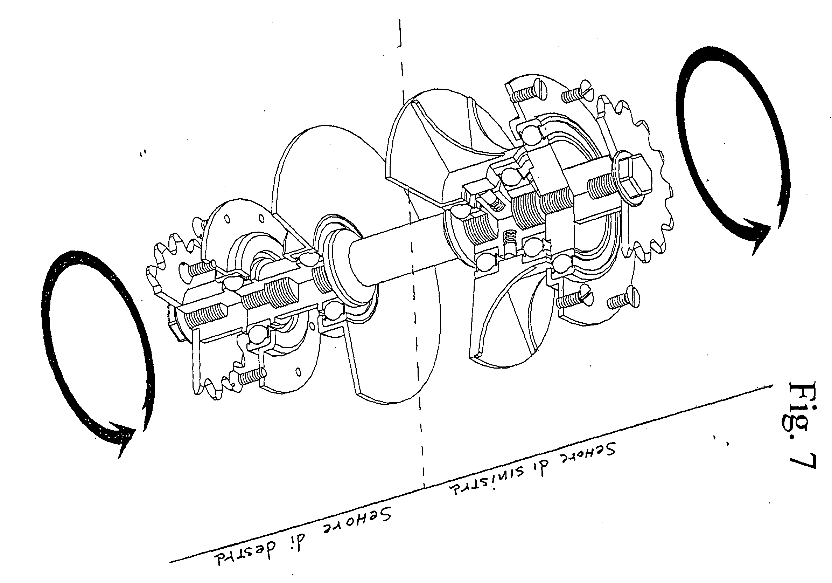

**Fig. 7 -** Cut-out view of the rear wheel hub.

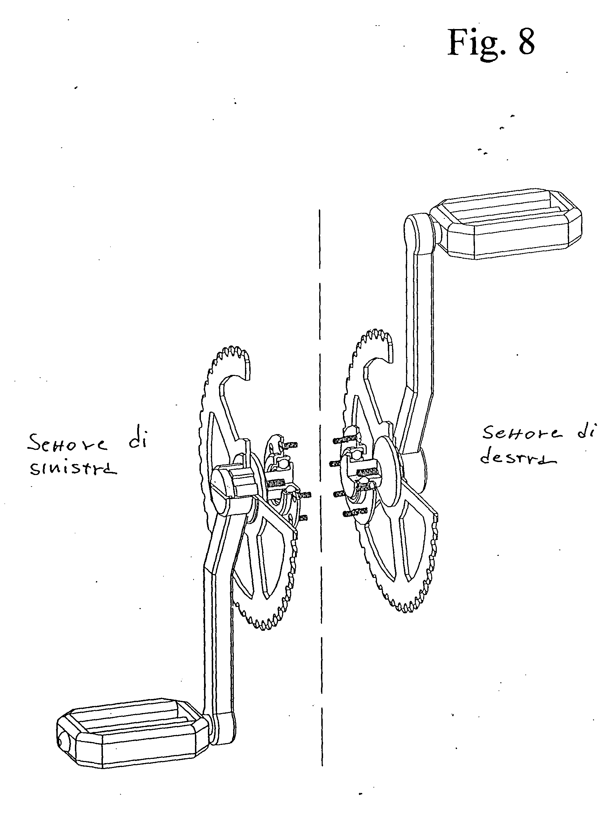

**Fig. 8 -** Cut-out view of the assemblies that form the pedal propulsion assembly.

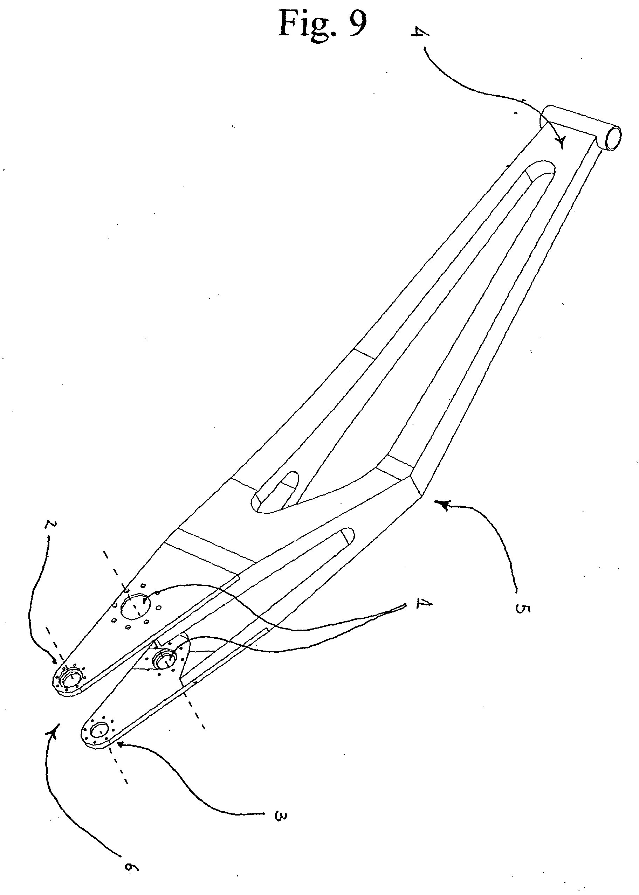

**Fig. 9 -** Three-dimensional view of the frame where it is possible to visualize the geometric construction concepts.

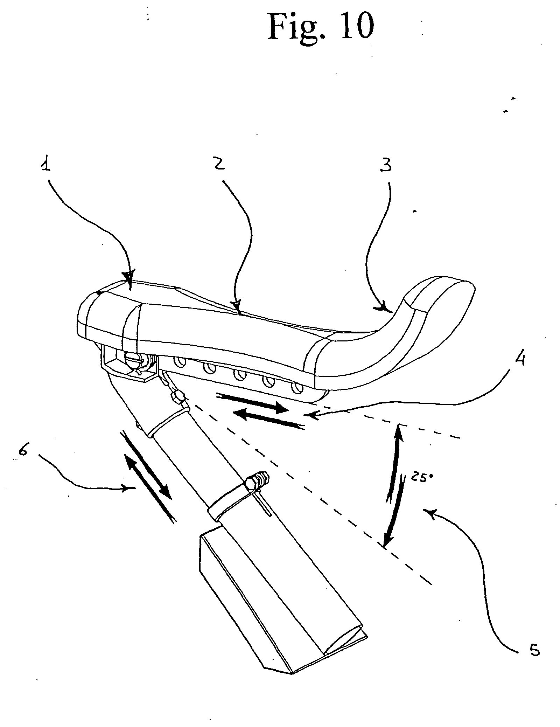

**Fig. 10 -** Three-dimensional view of the saddle assembly where it is possible to visualize the possible adjustment method.

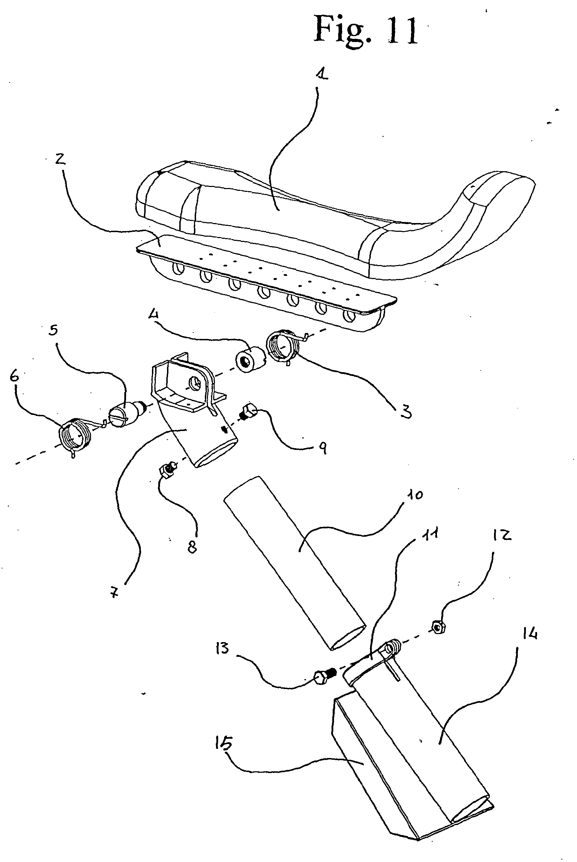

**Fig. 11 -** Exploded saddle assembly.

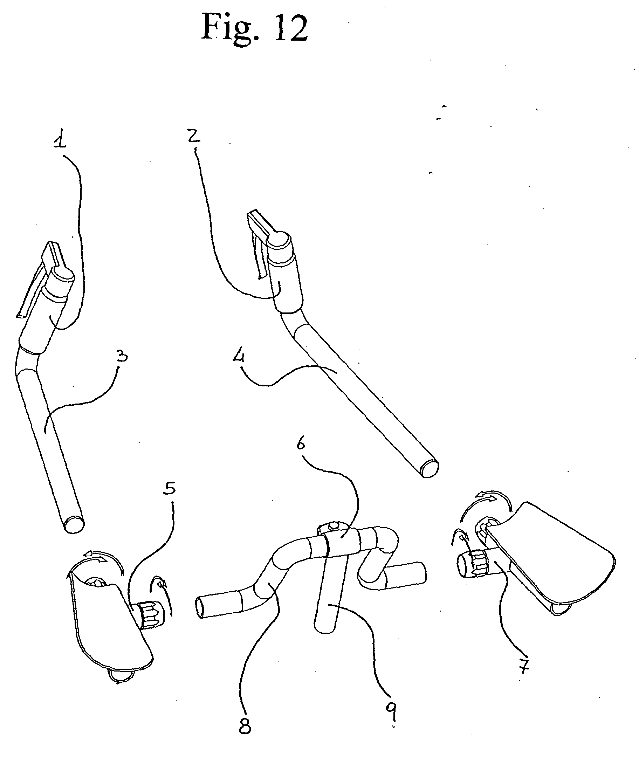

**Fig. 12 -** Three-dimensional view of the handlebar assembly where it is possible to visualize the various components.

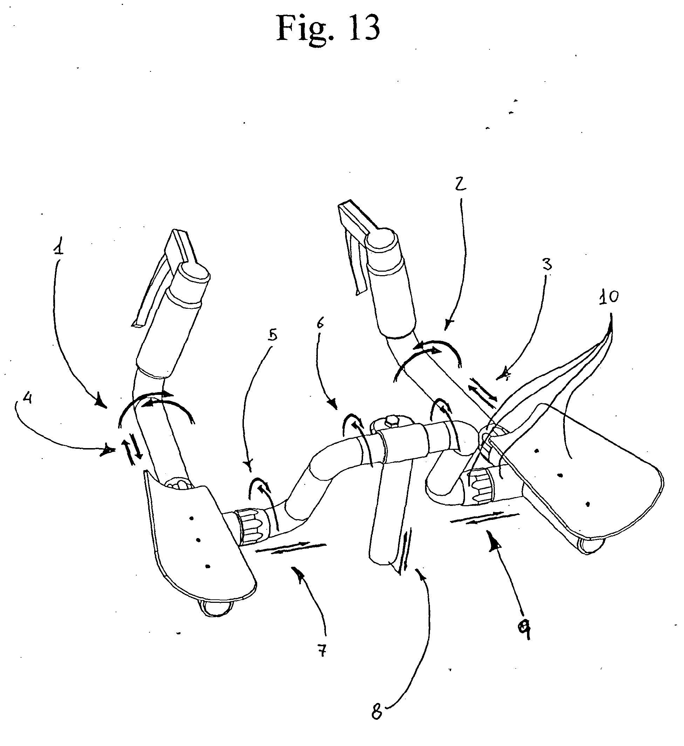

**Fig. 13 -** Three-dimensional view of the handlebar assembly where it is possible to visualize the various adjustment possibilities.

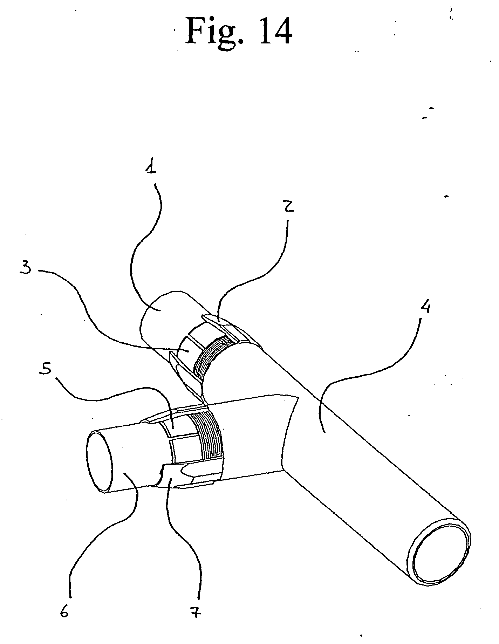

**Fig. 14 -** Three-dimensional view of the special joint in the handlebar assembly.

### Improved method for implementing the invention

Following the results of preliminary tests, carried out with a prototype cantilevered bicycle using the technology that is the object of the present invention, as well as the technologies claimed in the Italian priority documents (VE2003A000001-VE2003A000008), the prototype was proved with a single gear, and with an internal seven gear change. For the test I used an athlete who practises cycling at amateur level, with cycling experience of approximately 150 Km a week in the last five years, and from data collected in the three weeks of tests it emerged that the athlete increased his average weekly distance by approximately 25 % equal to energy spent, he exceeded his maximum speed of 18km/h reached with conventional racing bicycles, and another very important point, after approximately four hours mounted on the saddle the cyclist did not experience any particular problems in the perineal, gluteal areas etc., thus establishing the seat of the tested bicycle as superior to conventional racing bicycle seats.

From the best results obtained in the first tests, and considering the very pleasant and aggressive design resulting from the new ergotechnic position, this new racing bicycle contains all the necessary requisites for achieving commercial success, with the possibility of creating new disciplines in the sport of the cycling.

### Industrial applicability

My industrial feasibility study showed that, in an initial industrializing phase of the product being considered, it is possible to use rims, spokes, tyres, front forks, braking installations, coverings, linkages, handgrips and complete gear changes, already existing on the market at cut-rate costs, in terms of the handlebar assembly and the saddle assembly, the new design imposes a new industrial process with initial costs that are only slightly higher than those of current analogous products, in terms of the frame the valuation has been carried out for a monocoque solution in composite material, with easy access to the industrial processes relative to these materials.

## Claims

1. Cantilevered pedal-propulsion bicycle including, (new to the prior art), a frame whose vertices duplicate a geometric triangle comprising, a front vertex, a rear vertex, and an intermediate vertex placed upwards, a pedal propulsion assembly, a handlebar assembly, a saddle assembly, a front wheel, a rear driving wheel.

2. Cantilevered pedal propulsion bicycle, according to claim 1 **characterised in that**, between the intermediate vertex placed upwards, and the rear vertex of the frame the appendices forming the fork predisposed for the attachment of the rear motor wheel are located.

3. Cantilevered pedal propulsion bicycle, according to claim 1 and 2, **characterised in that**, at the ends of the appendices forming the rear fork of the frame the pedal propulsion assembly is rotationally attached.

4. Cantilevered pedal propulsion bicycle, according to claim 1 and 3, **characterised in that**, the pedal propulsion assembly is cantilevered with respect to the rear wheel hub.

5. Cantilevered pedal propulsion bicycle, according to claim 1 and 3, **characterised in that**, the extension of the appendices of the frame that form the rear fork, does not exceed the circumference of the rear wheel.

6. Cantilevered pedal propulsion bicycle, according to claim 1-3 and 4, **characterised in that** the pedal propulsion assembly is made up of two separate assemblies arranged antimetrically,

7. Cantilevered pedal propulsion bicycle, according to claim 1, **characterised in that**, the hub of the rear driving wheel contains a shaft made up of different mechanical components supported rotationally in an intermediate position included between the initial part and that terminal of the appendices that forms the rear fork, as well as in said hub.

8. Cantilevered pedal propulsion bicycle, according to claim 1-3-4 and 7, **characterised in that** the 180° contrapositioning of the cyclist and the motion transmission are guaranteed, in both rotation directions, by the connection of the compound shaft with the propulsion assembly, by means of two lateral chains.

9. Cantilevered pedal propulsion bicycle, according to claim 1, **characterised in that** in the inverse "T" joints, in the handlebar assembly the conic constriction ring nuts are adopted for the locking of the present appendices of said assembly.

10. Cantilevered pedal propulsion bicycle according to claim 1, **characterised in that** the anatomical shape of the seat comprises three sections, first section (front) for the support of the pubic area with a width greater than that of the other two sectors, second sector (central) for the support of the perineum with a width lower than the first sector, having semicircular symmetric side indentations, third sector (rear) of intermediate width between the first and the second sector, with a semicircular upward facing shape.
